(19) Europäisches Patentamt
European Patent Office
Office européen des brevets

(11) **EP 1 006 345 A1**

## (12) EUROPEAN PATENT APPLICATION

(43) Date of publication:
**07.06.2000 Bulletin 2000/23**

(51) Int. Cl.$^7$: **G01J 5/60**

(21) Application number: **99124229.8**

(22) Date of filing: **03.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.12.1998 CZ 980981**

(71) Applicant: **Lingart, Jurij K**
**101 00 PRAHA 10 (CZ)**

(72) Inventor: **Lingart, Jurij K**
**101 00 PRAHA 10 (CZ)**

(74) Representative:
**Madgwick, Paul Roland**
**RUSCHKE HARTMANN BECKER,**
**Pienzenauerstrasse 2**
**81679 München (DE)**

(54) **Method of determining the actual temperature of real bodies**

(57) A method of determining the actual temperature of real bodies by measuring, with a non-selective receiver, the spectral intensity and wavelength of thermal radiation. During measurement, the wavelengths $\lambda_1$ and $\lambda_2$ of thermal radiation are recorded, corresponding to the points of inflexion on the curve of the spectral intensity of radiation as a function of the wavelength of this radiation $I_{\lambda T} = f(\lambda, T)$ or the size of the wavelength corresponding to the one from the points of inflexion $\lambda_{1,2}$ a $\lambda_{max}$, corresponding to the maximum value of the function $I_{\lambda T} = f(\lambda, T)$. The absolute actual temperature $T$ of the real body is then determined from the corresponding formula as a function of the wavelengths $\lambda_1$, $\lambda_2$ and $\lambda_{max}$.

EP 1 006 345 A1

**Description**

Field of the Invention

The invention deals with the area of temperature measuring, particularly a method of determining the actual temperatures of real bodies by a contactless method based on establishing the intensity and wavelengths of thermal radiation emitted from the surface of the body.

Description of the Prior Art

A method exists of determining the temperature of a body based on the principle of its thermal radiation, whereby the whole radiation flow is measured by a radiation receiver, pre-calibrated by means of an absolutely black body with known temperature (see publication "Temperature measurement", page 315, by O.A. Gerashchenko *et al*, published by Naukova dumka, Kiev, 1984). The disadvantage of this method is the need for individual calibration of each receiver. Moreover, in measuring the temperature of real bodies, owing to the lower radiating capability of real bodies, pyrometers show lower temperature values, which correspond to the so-called radiation temperature of the body. At low levels of radiating capability, that temperature can differ from the actual temperature of the body by several hundred degrees °K. The actual temperature is determined in that case by the formula $T = T_p (1/\varepsilon_T)^{1/2}$, where $T_p$ is the radiation temperature and $\varepsilon_T$ is the radiating capability of the body at the temperature measured. If the radiating capability of the body under examination is not known, it is not possible to measure its temperature accurately.

The closest to this invention is the method of determining the actual temperature of real bodies by measuring, with a non-selective receiver, the spectral intensity and wavelength of thermal radiation. This is known as the method of spectral relation pyrometry (see the publication "Heat Measurement in Engineering", page 350, 353 to 358, by F. Lineveg, published by "Metalurgija" Moscow, 1980). By this method, the chromatic temperature is measured, which is equal to the temperature of an absolutely black body, having the same proportion of monochromatic radiation for the wavelength $\lambda_1$ and $\lambda_2$ as the body under examination.

The actual temperature is determined by a calculation using the formula

$$\frac{1}{T} - \frac{1}{T_c} = \frac{I_n \dfrac{\varepsilon_{\lambda 1 T}}{\varepsilon_{\lambda 2 T}}}{C_2 \dfrac{1}{\lambda_1} \cdot \dfrac{1}{\lambda_2}}$$

where $T_c$ is the chromatic temperature of the body; $\lambda_1$ and $\lambda_2$ the wavelengths by which monochromatic radiance is measured; $\varepsilon_{\lambda 1 T}$ and $\varepsilon_{\lambda 2 T}$ the magnitudes of radiating capability, which correspond to the wavelengths $\lambda_1$ and $\lambda_2$ at the temperature T.

This method has the following disadvantages. Spectral relation pyrometers, like total radiation pyrometers, must be calibrated in accordance with an absolutely black body. Radiating capabilities $\varepsilon_{\lambda 1 T}$ and $\varepsilon_{\lambda 2 T}$ for wavelengths $\lambda_1$ and $\lambda_2$ can vary in real bodies, therefore the relation of monochromatic radiation for this body can differ from the analogous relation for the absolutely black body at the same temperature, and the actual temperature will differ from the measured temperature. The temperature measured by this method will correspond to the actual temperature only for so called "grey bodies", when the monochromatic radiating capabilities $\varepsilon_{\lambda 1 T}$ and $\varepsilon_{\lambda 2 T}$ are the same.

Summary of the Invention

The method of determining the actual temperature of real bodies by measuring, with a non-selective receiver, the spectral intensity and wavelength of thermal radiation according to this invention makes it possible to eliminate the above disadvantages. The basis of the invention lies in the fact that during measurement the wavelengths $\lambda_1$ and $\lambda_2$ of thermal radiation are recorded, corresponding to the points of inflexion on the curve of the spectral intensity of radiation as a function of the wavelength of this radiation $I_{\lambda T} = f(\lambda, T)$ or the size of the wavelength corresponding to the one from the points of inflexion $\lambda_{1,2}$ and $\lambda_{max}$, corresponding to the maximum value of the function $I_{\lambda T} = f(\lambda, T)$, while in the first case the actual temperature T of the real body is determined according to the formula

$$T = \frac{C_2 \, (\lambda_2 - \lambda_1)^2}{2 \, \lambda_1 \, \lambda_2 \, (\lambda_1 + \lambda_2)}$$

where $C_2 = 1.4388 \times 10^4 [\mu m \; °K]$, - the second constant of radiation, and in the second case the actual temperature T of the real body is determined according to the formula

$$T = \frac{C_2 \, (\lambda_{max} - \lambda_{1,2})^2}{\lambda_{1,2} \, \lambda_{max} \, (2 \, \lambda_{max} - \lambda_{1,2})}$$

Examples of Preferred Embodiments

Example 1

In measuring the intensity of thermal radiation from the surface of the body under examination, a non-selective receiver records the values of radiation wavelengths $\lambda 1$ and $\lambda 2$, which correspond to the points of inflexion on the curve of the spectral intensity of radiation as a function of the wavelength of this radiation $I_{\lambda T} = f(\lambda, T)$. The absolute actual temperature T of the real body is determined according to the formula

$$T = \frac{C_2 \, (\lambda_2 - \lambda_1)^2}{2 \, \lambda_1 \, \lambda_2 \, (\lambda_1 + \lambda_2)}$$

where $C_2 = 1.4388 \times 10^4 [\mu m \; °K]$, - the second constant of radiation.

Example 2

In measuring the Intensity of thermal radiation from the surface of the body under examination, a non-selective receiver records the values of radiation wavelengths $\lambda_1$ and $\lambda_2$, which correspond to the points of inflexion on the curve of the spectral intensity of radiation as a function of the wavelength of this radiation $I_{\lambda T} = f(\lambda, T)$, and further the wavelength $\lambda_{max}$, corresponding to the maximum value of the latter function $I_{\lambda T} = f(\lambda, T)$. The absolute actual temperature T of the real body is determined according to the formula

$$T = \frac{C_2 \, (\lambda_{max} - \lambda_{1,2})^2}{\lambda_{1,2} \, \lambda_{max} \, (2 \, \lambda_{max} - \lambda_{1,2})}$$

The theoretical reasoning of the method, as described in the above cited cases, is the following. The spectral distribution of intensity of radiation of any body is a product of the Planck function

$$I_{(\lambda,T)} = \varepsilon_{(\lambda,T)} \cdot C_1 \lambda^{-5} \left(\exp \frac{C_2}{\lambda T} - 1\right)^{-1} \qquad \ldots\ldots\ldots (1)$$

where $C_1 = 3.7413 \times 10^{-16}$ W m$^2$ is the first radiation constant $C_2 = 1.4388 \times 10^4$ µm °K is the second radiation constant $\varepsilon_{(\lambda,T)}$ is the radiating capability of the body (as a function of the spectrum and temperature), $\lambda$ is the radiation wavelength and T is the temperature of the radiation source.

This function is characterised by the presence of a peak on the wavelength $\lambda_{max}$ and of two points of inflexion, one being short-wave on the wavelength $\lambda_1$ and the other long-wave on the wavelength $\lambda_2$. To further describe the basis of the method according to this invention, use can be made of the well-known Wien approximation for intensity of radiation

$$I_{(\lambda,T)} = \varepsilon_{(\lambda,T)} \cdot C_1 \lambda^{-5} \left(\exp \frac{-C_2}{\lambda T}\right), \qquad \ldots\ldots (2)$$

where the deviation, up to a temperature of 2500 °K, is less than 0.3 % (see Table 1). The above mentioned wavelength values, corresponding to the points of inflexion on the curve of the spectral intensity of radiation as a function of the wavelength of this radiation, is established according to the following conditions:

I' ($\lambda_{max}$) = 0 - for the point of the peak
I" ($\lambda_1$) = 0 and I" ($\lambda_2$) = 0 - for the points of inflexion

After calculating the derivation and inserting the value $C_2$, the result will be

$$\lambda_{max} = 2877.6/T; \ \lambda_1 = 1704/T; \ \lambda_2 = 4056/T \qquad (3)$$

These formulae are mutually related and, at the same temperature, if the position of one of the above characteristic points is known, it is possible to find the two remaining points also.

By this method, the task of determining the actual temperature for absolutely black and "grey" bodies is restricted to a determination of the position of one of the above mentioned characteristic points, and calibration of a measuring apparatus according to an absolutely black body is not necessary. That is the basic advantage of the method according to this invention, since an error in calibration is one of the major reasons for common pyrometer errors.

Results of calculating, using optical acoustic filters with distinguishing capability of 2 nm, the points of inflexion and the points of the peak in the curve of the Planck function of radiation intensity (see Table 2) show that the sensitivity of this method of determining the actual temperature at the points of inflexion is several orders higher than at the point of the maximum value of the function, and also that the sensitivity at the point in wavelength $\lambda_1$ is greater than at the point in wavelength $\lambda_2$ (see Table 3).

An assessment of error in the method of determining the temperature according to the invention, taking account of error during determination of the points of inflexion on the basis of the common form of notation of the above mentioned expressions

$$T = \frac{K}{\lambda}, \text{ after the derivation } \Delta T = \frac{K}{\lambda^2}\Delta\lambda$$

shows that this error is not greater than 0.11 % for the point of inflexion in the wavelength $\lambda_1$ and 0.5 % for the point of inflexion in the wavelength $\lambda_2$ (see Table 4).

In real physical bodies, radiating capability is a function of wavelength and temperature. If we indicate the Planck function in the Wien approximation by (f) and leave out the indices in the function ($\varepsilon$), then the following will apply:

$$I(\lambda t) = \varepsilon f$$

$$I'(\lambda t) = \varepsilon' f + f' \varepsilon \qquad \ldots\ldots\ldots\ldots (4)$$

$$I''(\lambda t) = \varepsilon'' f + 2\varepsilon' f' + \varepsilon f''$$

For the characteristic points then, after executing the derivation, we obtain

$$\frac{\varepsilon'}{\varepsilon} + \frac{C_2}{\lambda^2 T} - \frac{5}{\lambda} = 0 \quad \text{in the maximum value of the function and} \qquad \ldots (5)$$

$$\frac{\varepsilon''}{\varepsilon} + 2\frac{\varepsilon'}{\varepsilon} \cdot \left(\frac{C_2}{\lambda^2 T} - \frac{5}{\lambda}\right) + \frac{1}{\lambda^2} \cdot \left[\left(\frac{C_2}{\lambda^2 T}\right)^2 - 12\frac{C_2}{\lambda T} + 30\right] = 0$$

at the points of inflexion.

The results of the calculations of the position of the characteristic points for the various types of spectral functions $\varepsilon$ are presented in the attached Table 5.

On the basis of the results ascertained, it is possible to derive formulae that permit the establishment of the actual temperature of real physical bodies according to the position of the characteristic points for radiation wavelengths $\lambda_1$ and $\lambda_2$. On the presumption that it is possible to express the radiating capability of bodies by the function $\varepsilon = K\lambda^n + K_1$, which is appropriate for almost all materials, because $\varepsilon$ is an even, continuous function of wavelength (see above mentioned equation 3) then the following

$$\varepsilon' = K n \lambda^{n-1} \quad \text{and} \quad \varepsilon'' = K n (n-1)\lambda^{n-2} \qquad \ldots\ldots\ldots\ldots (6)$$

applies: and after carrying out the corresponding transformations to the actual temperature T, the following will apply:

$$T = \frac{C_2 [(6-n)^{1/2} \pm 1]}{\lambda_{1,2} (5-n)(6-n)^{1/2}} \qquad (7)$$

where the sign "plus" designates the long-wave inflexion point and the sign "minus" the short-wave inflexion point.

From this formula it a also possible to ascertain the value of the degrees indicator (n) in the wavelength $\lambda$ as a function of $\varepsilon = K \lambda^n$ on the basis of the known position of the characteristic points $\lambda_2$ a $\lambda_1$ as follows:

$$n = 6 - \left(\frac{\lambda_1 + \lambda_2}{\lambda_1 - \lambda_2}\right)^2 \qquad (8)$$

Finally, to determine the actual temperature of bodies, the following formula applies:

$$T = \frac{C_2}{2\lambda_1\lambda_2} \cdot \frac{(\lambda_2 - \lambda_1)^2}{(\lambda_1 + \lambda_2)} \quad \text{or} \quad T = \frac{C_2}{\lambda_{1,2}\lambda_{max}} \cdot \frac{(\lambda_{max} - \lambda_{1,2})^2}{(2\lambda_{max} - \lambda_{1,2})} \qquad (9)$$

The advantage of the invention is that it is possible to measure the actual temperature of real bodies without knowing the radiation capability of the object under examination and, further, that a marked reduction in measurement error is achieved. In order to verify the advantages of the method according to this invention, the following computer experiment was carried out.

The spectral relation of radiation intensity of bodies was calculated with a previously set relation of radiating capability on a wavelength (wavelength $\lambda$ in degrees of 1 nm). The computer ascertained the wavelengths in which the second derivation of the function of intensity and wavelength was equal to zero, then according to the above mentioned equation (8) the value (n) was determined and the temperature assessed.

The results found are set out in Table 6. It can be seen that the maximum error is 0.25 %, which is much lower than in all the other known contactless methods to date. At the same time the method according to this invention does not require expensive calibration of an apparatus according to a standard measure, and regular checking which is normally carried out once a year in centres specially equipped for this purpose.

Industrial Use

The invention is used in the determination of the actual temperature of real bodies by a contactless method.

Table 1

Approximation error of the Planck function by means of the Wien approximation

| $\lambda \ \times \ T$ | 2000 | 2500 | 3000 | 3500 | 4000 |
|---|---|---|---|---|---|
| $\dfrac{I_{(\lambda,T)} \ \text{Planck}}{I_{(\lambda,T)} \ \text{Wien}}$ | 1.0008 | 1.003 | 1.008 | 1.017 | 1.056 |

Table 2

| The results of calculation for the points of inflexion and points of the maximum value of the Planck function at temperatures of 1000, 1500 and 2000 K and with a filter with a distinguishing capability of 2 nm. | | | | | |
|---|---|---|---|---|---|
| T = 1000 K | | | | | |
| $\lambda_1$ | V | $\lambda_{max}$ | V | $\lambda_2$ | V |
| µm | mV | µm | mV | µm | mV |
| 1.702 | 873.9 | 2.878 | 2.01330 | 4.053 | 1.57910 |
| 1.703 | 875.7 | 2.879 | 2.01230 | 4.054 | 1.57858 |
| 1.704 | 877.5 | 2.880 | 2.01228 | 4.055 | 1.57805 |
| 1.705 | 879.3 | 2.881 | 2.012274 | 4.056 | 1.57753 |
| 1.706 | 881.1 | 2.882 | 2.012275 | 4.057 | 1.57670 |
| | | | | | |
| T = 1500 | | | | | |
| $\lambda_1$ | V | $\lambda_{max}$ | V | $\lambda_2$ | V |
| µm | mV | µm | mV | µm | mV |
| 1.132 | 6.6363 | 1.918 | 15.28060 | 2.718 | 11.9950 |
| 1.133 | 6.6577 | 1.919 | 15.28070 | 2.719 | 11.9890 |
| 1.134 | 6.6770 | 1.920 | 15.28080 | 2.720 | 11.9830 |
| 1.135 | 6.6970 | 1.921 | 15.28070 | 2.721 | 11.9770 |
| 1.136 | 6.7170 | 1.922 | 15.28050 | 2.722 | 11.9710 |
| | | | | | |
| T = 2000 | | | | | |
| $\lambda_1$ | V | $\lambda_{max}$ | V | $\lambda_2$ | V |
| µm | mV | µm | mV | µm | mV |
| 0.848 | 27.85 | 1.438 | 64.39300 | 2.038 | 50.5654 |
| 0.849 | 27.96 | 1.439 | 64.39310 | 2.039 | 50.5314 |
| 0.850 | 28.08 | 1.440 | 64.39312 | 2.040 | 50.4976 |
| 0.851 | 28.19 | 1.441 | 64.39220 | 2.041 | 50.4638 |
| 0.852 | 28.31 | 1.442 | 64.39217 | 2.042 | 50.4430 |

Table 3

Change in the output signal of the radiation receiver, calculated according to the formula

$\Delta I / I$ for $\lambda_1$, $\lambda_{max}$, $\lambda_2$

| T, K | 1000 | 1500 | 200 |
|---|---|---|---|
| $\lambda_1$ | 0.2 | 0.3 | 0.4 |
| $\lambda_{max}$ | $7 \times 10^{-5}$ | $3.2 \times 10^{-4}$ | $1 \times 10^{-3}$ |
| $\lambda_2$ | $3.3 \times 10^{-2}$ | $5.1 \times 10^{-2}$ | $6.7 \times 10^{-2}$ |

Table 4

| Error in temperature measurement by the method according to the invention, in the points of inflexion $\lambda_1$ and $\lambda_2$ | | |
|---|---|---|
| $T_1$K | $\Delta T(\lambda_1)$ | $\Delta T(\lambda_2)$ |
| 1000 | 0.6 | 0.25 |
| 1500 | 1.3 | 0.55 |
| 2000 | 2.3 | 1.00 |

Table 5

Position of the characteristic points on the curve of radiation intensity with various functions of radiation coefficient and wavelength.

| $\varepsilon = \varepsilon_{(\lambda)}$ | $\lambda T, \mu m \ ^\circ K$ | | |
|---|---|---|---|
| | $\lambda_1 T$ | $\lambda_{max} T$ | $\lambda_2 T$ |
| $\varepsilon = \dfrac{K}{\lambda_2}$ | 1329 | 2057 | 2785 |
| $\varepsilon = \dfrac{K}{\lambda}$ | 1493 | 2400 | 3307 |
| $\varepsilon = K \lambda$ | 1991 | 3600 | 5209 |
| $\varepsilon = K \lambda^2$ | 2400 | 4800 | 7200 |

Table 6

Temperature values, ascertained according to the position of the points of inflexion during the various relations $\varepsilon$ to $\lambda$

| $\varepsilon = K \lambda^2$ | $T_1 K$ | $\lambda_1$, µm | $\lambda_{max}$, µm | $\lambda_2$, µm | $T_1,K$ | $T_2,K$ |
|---|---|---|---|---|---|---|
| $k$ | 1000 | 1.0058 | 1.440 | 1.8748 | 999.8 | 1000.1 |
| $\varepsilon = \dfrac{k}{\lambda^5}$ | 2000 | 0.5029 | 0.720 | 0.9371 | 1999.7 | 2000.2 |
|  | 3000 | 0.3353 | 0.480 | 0.6247 | 2998.8 | 2998.8 |
| $k$ | 1000 | 1.3290 | 2.0570 | 2.7840 | 1001.6 | 1002.4 |
| $\varepsilon = \dfrac{k}{\lambda^2}$ | 2000 | 0.6645 | 1.0286 | 1.3920 | 2003.3 | 2005.4 |
|  | 3000 | 0.4430 | 0.6857 | 0.9280 | 3004.9 | 3007.8 |
| $k$ | 1000 | 1.4930 | 2.400 | 3.3070 | 999.7 | 999.7 |
| $\varepsilon = \dfrac{k}{\lambda}$ | 2000 | 0.7465 | 1.200 | 1.6535 | 1999.4 | 1999.4 |
|  | 3000 | 0.4977 | 0.800 | 1.1020 | 2998.5 | 2998.3 |
| $k$ | 1000 | 1.8355 | 3.200 | 4.5640 | 999.8 | 1000.0 |
| $\varepsilon = \dfrac{k}{\lambda}$ | 2000 | 0.9178 | 1.600 | 2.2820 | 1999.4 | 2000.0 |
|  | 3000 | 0.6118 | 1.067 | 1.5210 | 3000.0 | 3000.6 |
|  | 1000 | 1.9900 | 3.600 | 5.2100 | 1000.0 | 998.5 |
| $\varepsilon = k\lambda$ | 2000 | 0.9955 | 1.800 | 2.6050 | 1997.5 | 1997.0 |
|  | 3000 | 0.6637 | 1.200 | 1.7370 | 2996.9 | 2995.0 |
|  | 1000 | 2.400 | 4.800 | 7.200 | 1000.0 | 1000.0 |
| $\varepsilon = k\lambda^2$ | 2000 | 1.200 | 2.400 | 3.600 | 2000.0 | 2000.0 |
|  | 3000 | 0.800 | 1.600 | 2.400 | 3000.0 | 3000.0 |

**Claims**

1. A method of determining the actual temperature of real bodies by measuring, with a non-selective receiver, the spectral intensity and wavelength of thermal radiation, **characterised in that**, during measurement, the wavelengths ($\lambda_1$ and $\lambda_2$) of thermal radiation are recorded, corresponding to the points of inflexion on the curve of the spectral intensity of radiation as a function of the wavelength of this radiation $I_{\lambda T} = f(\lambda, T)$ or the size of the wavelength corresponding to the one from the points of inflexion $\lambda_{1,2}$ a $\lambda_{max}$, corresponding to the maximum value of the function $I_{\lambda T} = f(\lambda, T)$, while in the first case the actual temperature T of the real body is determined according to the formula

$$T = \frac{C_2 (\lambda_2 - \lambda_1)^2}{2 \lambda_1 \lambda_2 (\lambda_1 + \lambda_2)}$$

where $C_2 = 1.4388 \times 10^4$ [µm K], - the second constant of radiation, $\lambda_1$, $\lambda_2$ are wave lengths of thermal radiation, and in the second case the actual temperature T of the real body is determined according to the formula:

$$T = \frac{C_2 (\lambda_{max} - \lambda_{1,2})^2}{\lambda_{1,2} \lambda_{max} (2 \lambda_{max} - \lambda_{1,2})}$$

where $\lambda_{max}$ is a wavelength corresponding to the maximum value of intensity of thermal radiation of the body.

2. A device for measuring the temperature of an object, the device including:

   a receiver for receiving thermal radiation from the object;

   analysing means for analysing the spectrum of the thermal radiation to determine the wavelength ($\lambda_1$, $\lambda_2$) of at least one point of inflexion on the curve of the spectral intensity of the radiation as a function ($I_{\lambda T} = f(\lambda, T)$) of the wavelength;

   calculating means for calculating the temperature of the object from the wavelength of said point of inflexion according to a predetermined relationship relating temperature and the wavelength of the point of inflexion.

3. A device according to claim 2 wherein the analysing means also determines the wavelength ($\lambda_{max}$) at which the curve of spectral intensity ($I_{\lambda T} = f(\lambda, T)$) has a maximum; and the predetermined relationship relates temperature to the wavelength at the point of inflexion ($\lambda_1$, $\lambda_2$) and the wavelength at the maximum ($\lambda_{max}$).

4. A device according to claim 3 wherein the relationship is

$$T = \frac{C_2 (\lambda_{max} - \lambda_{1,2})^2}{\lambda_{1,2} \lambda_{max} (2\lambda_{max} - \lambda_{1,2})}$$

where $C_2 = 1.4388 \times 10^4$ (µm K) - the second constant of radiation, $\lambda_{max}$ is the wavelength corresponding to the maximum value of the intensity of the thermal radiation, and $\lambda_{1,2}$ is the wavelength at which the curve of radiation intensity has a point of inflexion.

5. A device according to claim 2 wherein the analysing means also determines the wavelength ($\lambda_2$) at which the curve of spectral intensity ($I_{\lambda T} = f(\lambda, T)$) has a second point of inflexion; and the predetermined relationship relates temperature to the wavelength both points of inflexion ($\lambda_1$, $\lambda_2$).

**6.** A device according to claim 5 wherein the relationship is

$$T = \frac{C_2(\lambda_2 - \lambda_1)^2}{2\lambda_1 \lambda_2(\lambda_1 + \lambda_2)}$$

where where $C_2$ = 1.4388 x 104 (μm K) - the second constant of radiation, and $\lambda_{1,2}$ are the wavelengths at which the curve of radiation intensity has points of inflexion.

**European Patent Office**

# EUROPEAN SEARCH REPORT

**Application Number**

EP 99 12 4229

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE WPI<br>Section EI, Week 199021<br>Derwent Publications Ltd., London, GB;<br>Class S03, AN 1990-162099<br>XP002130739<br>& SU 1 497 465 A (CHERMETAVTOMATIKA),<br>30 July 1989 (1989-07-30)<br>* abstract * | 1 | G01J5/60 |
| A | ANDREIC Z: "DISTRIBUTION TEMPERATURE CALCULATIONS BY FITTING THE PLANCK RADIATION CURVE TO A MEASURED SPECTRUM"<br>APPLIED OPTICS,US,OPTICAL SOCIETY OF AMERICA,WASHINGTON,<br>vol. 31, no. 1,<br>1 January 1992 (1992-01-01), pages 126-130, XP000246885<br>ISSN: 0003-6935<br>* the whole document * | 1 | |
| A | US 5 568 978 A (JOHNSON SHANE R ET AL)<br>29 October 1996 (1996-10-29)<br>* abstract; figures * | 1 | **TECHNICAL FIELDS SEARCHED (Int.Cl.7)**<br><br>G01J<br>G01K |
| A | ANONYMOUS: "NON-CONTACT PYROMETER FOR MODERATE TEMPERATURES"<br>INDUSTRIAL ELECTRONICS,<br>vol. 3, no. 6, June 1965 (1965-06), pages 282-284, XP000879002<br>* page 282 - page 283 * | 1 | |

The present search report has been drawn up for all claims

| Place of search | Date of completion of the search | Examiner |
|---|---|---|
| THE HAGUE | 17 February 2000 | Ramboer, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 006 345 A1

## ANNEX TO THE EUROPEAN SEARCH REPORT
## ON EUROPEAN PATENT APPLICATION NO.

EP 99 12 4229

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2000

| Patent document cited in search report | | Publication date | Patent family member(s) | | Publication date |
|---|---|---|---|---|---|
| SU 1497465 | A | 30-07-1989 | NONE | | |
| US 5568978 | A | 29-10-1996 | US 5388909 | A | 14-02-1995 |

EPO FORM P0459

For more details about this annex : see Official Journal of the European Patent Office, No. 12/82

14